(19) **Europäisches Patentamt** / **European Patent Office** / **Office européen des brevets**

(11) **EP 4 531 264 B1**

(12) **EUROPEAN PATENT SPECIFICATION**

(45) Date of publication and mention
of the grant of the patent:
**29.10.2025 Bulletin 2025/44**

(51) International Patent Classification (IPC):
*H02N 2/00* (2006.01)    *H02N 2/02* (2006.01)
*H02N 2/08* (2006.01)    *H02N 2/10* (2006.01)
*H02N 2/12* (2006.01)    *H02N 2/16* (2006.01)

(21) Application number: **23208367.5**

(52) Cooperative Patent Classification (CPC):
**H02N 2/163; H02N 2/101;** H02N 2/021; H02N 2/08

(22) Date of filing: **07.11.2023**

(54) **HIGH POWER PIEZOELECTRIC MOTOR AND DRIVE**

PIEZOELEKTRISCHER HOCHLEISTUNGSMOTOR UND ANTRIEB

MOTEUR PIÉZOÉLECTRIQUE HAUTE PUISSANCE ET ENTRAÎNEMENT

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **29.09.2023 LT 2023016**

(43) Date of publication of application:
**02.04.2025 Bulletin 2025/14**

(73) Proprietors:
• **Vilniaus Gedimino technikos universitetas**
**10223 Vilnius (LT)**
• **Vytauto Didziojo Universitetas**
**44248 Kaunas (LT)**

(72) Inventors:
• **Vasiljev, Piotr**
**LT-08402 Vilnius (LT)**
• **Mazeika, Dalius**
**LT-11311 Vilnius (LT)**
• **Ceponis, Andrius**
**LT-02219 Vilnius (LT)**
• **Borodinas, Sergejus**
**LT-15142 Azulaukes k., Vilnius (LT)**
• **Bareikis, Regimantas**
**LT-06298 Vilnius (LT)**
• **Struckas, Arunas**
**LT-04330 Vilnius (LT)**

(74) Representative: **AAA Law**
**A. Gostauto 40B**
**03163 Vilnius (LT)**

(56) References cited:
WO-A2-03/010879    CN-A- 110 677 073
US-A1- 2006 145 572    US-B1- 6 262 515

**Description**

FIELD OF INVENTION

The invention pertains to the fields of electro-mechanical, mechatronic systems, and robotics. Specifically, this invention reveals the construction and embodiment options for a piezoelectric motor and drive, which can be used in high-precision and high-power rotational motion transmissions and technical applications.

TECHNICAL LEVEL

With the advancement of aeronautics and astronautic technologies, micro and nano satellites are being intensively developed and used for Earth observation, meteorological data collection, and telecommunication systems. Hence, there is a need to precisely control, coordinate, and maintain the position of these objects in space. In such positioning systems, the requirements for drives and actuators are raised in terms of reliability, precision, and power. Also, depending on the specific application, restrictions on the allowable mass and mounting volume of the device may apply.

In order to meet the technical requirements of the applied tasks, piezoelectric drives and actuators are increasingly being used. Currently, there are several technical solutions and patents that propose solutions to these technical problems.

The Taiwanese patent TWI450489B describes a small-sized rotary motor with a high torque and high angular resolution. The motor consists of a square-sectioned rod-shaped stator with flanges formed at both ends, and one of the ends has a conical cavity. The conical rotor is placed in the stator's conical cavity. By using a rotor clamping system, frictional force is generated between the rotor and the stator, which can be modified by adjusting the clamping system spring. Four piezoelectric multilayer transducers are mounted parallel to the edges of the stator, with their ends resting on the flanges formed at the ends of the stator. By applying two harmonic signals with a phase difference of $\pi/2$ to the multilayer piezoelectric transducers, bending deformations of the square-sectioned stator are generated, creating travelling wave oscillations. The stator's oscillations, transmitted through frictional force, result in the rotational motion of the conical rotor. The motor's high torque and precise angular resolution are achieved due to the large contact surface between the stator and rotor and the use of multilayer piezoelectric transducers in the motor's design. However, in order to increase the torque, it is necessary to increase the friction, which subsequently reduces the motor's reliability due to increased wear in the contact zone.

Japanese patent application JP2000152671A describes a piezoelectric rotary motor capable of achieving high torque. The motor's design is based on three V-shaped piezoelectric actuators evenly arranged around a cylindrical rotor. Each actuator has an individual clamping system. The V-shaped actuators are composed of two Langevin-type piezoelectric packages connected to each other at a 90-degree angle. A contact point is formed at the junction of the packages, which is supported against the cylindrical rotor. The operation of the V-shaped actuators is based on the superposition of the longitudinal oscillations of the Langevin-type packages, where the packages are excited by two harmonic electrical signals with a phase difference of $\pi/2$. These oscillations create an elliptical movement trajectory of the contact point. The use of longitudinal oscillations of Langevin-type packages in the motor ensures the possibility of obtaining high torque and high angular resolution in rotational motion. On the other hand, a drive design that uses multiple piezoelectric actuators results in the complex control of the motor due to uneven excitation frequencies of all three transducers. Additionally, individual clamping of transducers does not ensure equal friction at the three contact points, and a small contact surface and high clamping force increase wear in the contact zone and reduce the reliability of the drive.

US patent US6628045B2 describes a piezoelectric ring-shaped rotary motor, consisting of a stator composed of an elastic toothed ring-shaped stator with a firmly attached piezoelectric ring, a disc-shaped rotor, and a rotor clamping system. The piezoelectric ring electrode is divided into equal parts. By applying two harmonic electrical signals with a phase difference of $\pi/2$ to the ring electrodes, bending deformations of the toothed ring are started, creating travelling wave oscillations. These oscillations, through the friction between the rotor and stator teeth, generate the rotary motion of the rotor. The height and shape of the stator teeth influence the amplitude of bending oscillations in the contact zone between the stator and rotor, allowing the maximum torque and the speed of the motor to be increased. However, the use of a toothed stator to obtain high torque has a drawback - the maximum torque is limited by the tooth height and clamping force. When a certain ratio of tooth height to rotor clamping force is reached, the stator teeth begin to buckle, limiting the increase in the motor's torque.

US patent US6262515 B1 illustrates a piezoelectric motor including a disk-shaped rotor together with a disk-shaped stator having a comb-tooth top surface and a piezoelectric ring bonded to the stator. All these items are mounted onto a shaft which extending upwardly from the center of a rigid base.

International patent WO03010879 A2 illustrates a piezoelectric motor comprising a stator unit and a rotor unit. The rotor unit comprises a metallic disk or ring, which is structurally rigidly coupled to the shaft of the motor. The stator unit has a base plate and a ring that is shaped with a plurality of teeth that protrude transversely from the base plate.

US patent US2006145572 A1 reveals a piezoelectric oscillator with the use of standing waves of the coupled tangential-axial oscillations, with five active generators and five friction elements arranged in areas on the surfaces.

Chinese patent application CN110677073 A describes a double-sided staggered tooth ultrasonic motor stator comprising a piezoelectric ceramic plate and a double-sided toothed metal body.

US patent US6628045B2 is the closest tech-level document to the current invention with substantial improvements.

SUMMARY OF THE INVENTION

**Technical problem.** The technical problem addressed by this invention is to increase the torque, force, and speed, improve operational stability, and expand the functional capabilities of a piezoelectric rotary motor.

**Solution:** The goal of the invention is achieved by forming double-sided teeth in the ring-shaped piezoelectric motor stator, with their position chosen to coincide with the ring's own longitudinal oscillation nodes. The height of the double-sided teeth, including the stator height, is equal to or close to half the wavelength of the oscillations excited in the ring. Notches are formed on the horizontal symmetry axes of these double-sided teeth, which reduces the overall height of the motor and allows for larger displacement of tooth tips and rotor rotational speed. Rigid frictional elements are mounted on the top surfaces of the teeth, and two disc-shaped rotors are spring-clamped against them. The frictional elements and the rotor surfaces in contact with them are made of a rigid, wear-resistant material, such as aluminium oxide $Al_2O_3$ or titanium oxide $TiO_2$.The stator is fixed using a ring or different shaped fastener, which is attached to the stator permanently and in such a way that the positions of its attachment to the stator coincide with the resonance nodes of the longitudinal oscillations excited in the stator.

The stator longitudinal oscillations are induced by the excitation of the piezoelectric transducers mounted in the nodal zones of the stator ring's longitudinal oscillations, by one or two electrical harmonic signals, the phase difference of which is determined by $\pi/2$, or by two non-harmonic periodic signals, the phase difference of which is determined by $\pi$, and the frequency is tuned close to or coinciding with the resonant frequency of the ring stator's longitudinal oscillations.

The motor's torque and force are increased when the teeth are formed on both sides of the stator. In other words, double-sided teeth in the stator's flat ring, with a total height chosen to be close or equal to half the wavelength of the stator's longitudinal oscillation.

Special notches along the horizontal axis of symmetry of the double-sided teeth (and at the same time in the plane of the stator ring) make it possible to increase the rotation speed of the motor. They reduce the height of both the stator with teeth and the complete motor. At the same time, they help not to reduce or increase the amplitude of the displacement of the double-sided teeth tips by reducing the total height of the stator along with its double-sided teeth.

The stability of the motor operation is enhanced by the trapezoidal or analogous shape of the double-sided teeth of the stator, the long base of which is on the stator ring. This feature reduces or eliminates stator teeth buckling under the high axial loads of the motor.

The functional capabilities of the motor are extended by using several different excitation circuits for individual piezoelectric actuators (Langevin-type packages) or their groups, the sequence of piezoelectric actuator excitation, and the parameters of electrical excitation signals.

DESCRIPTION OF DRAWINGS

The drawings are provided as a reference to possible embodiments of the invention, but they do not limit the scope of the invention. None of the provided drawings and graphs should be considered limiting, but only as possible examples of the embodiment of the invention.

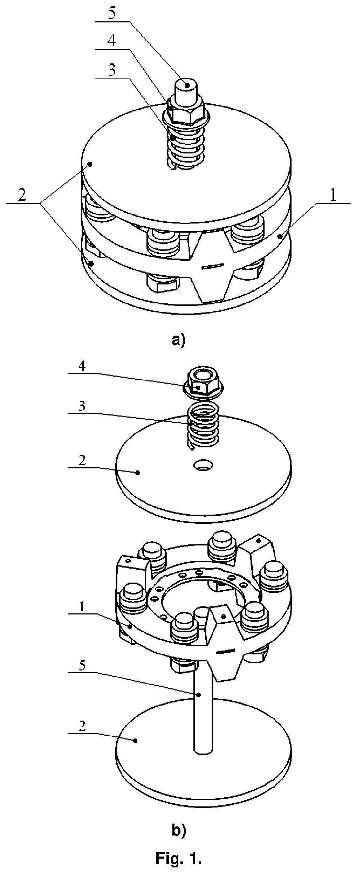

**Fig. 1.** Schematic diagram of the piezoelectric rotary motion motor: (a) - isometric view of the piezoelectric rotary motion motor; (b) - exploded view of the piezoelectric rotary motion motor.

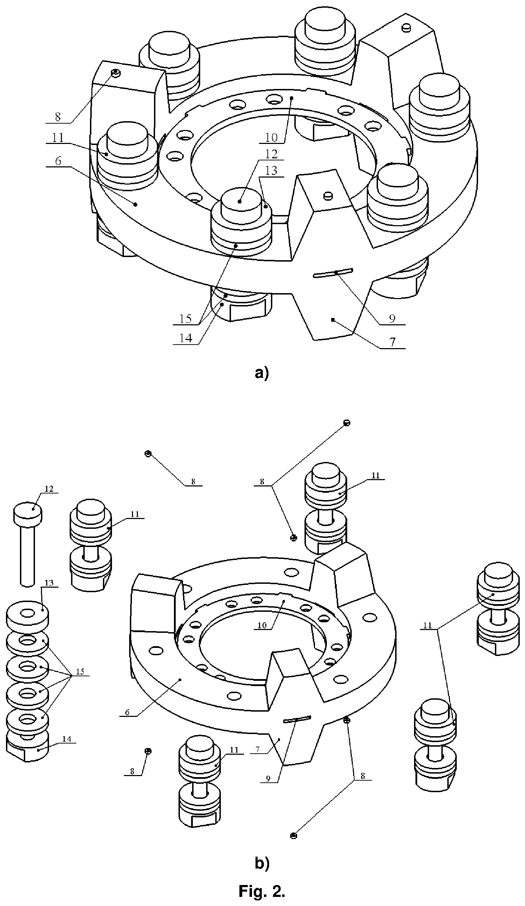

**Fig. 2.** Schematic diagram of the stator of the piezoelectric rotary motion motor: (a) - isometric view of the piezoelectric rotary motion motor stator; (b) - exploded view of the stator of the piezoelectric rotary motion motor.

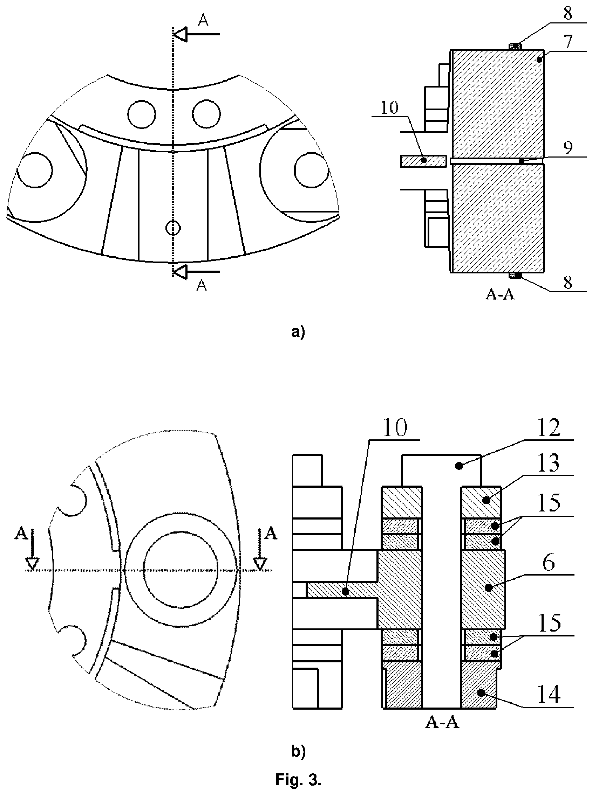

**Fig.** 3. Details of the design of the piezoelectric rotary motion motor tooth and the piezoelectric Langevin-type package: (a) - design details of the tooth; (b) - design details of the piezoelectric Langevin-type package.

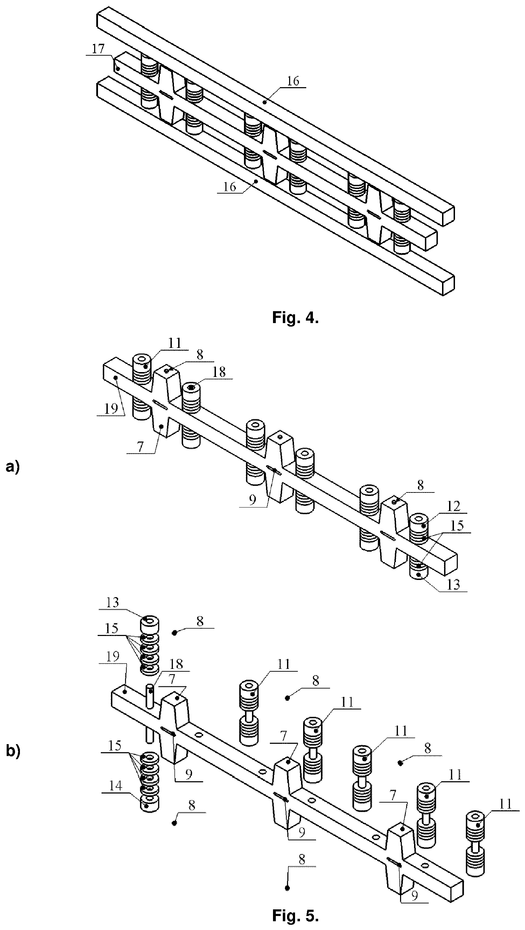

**Fig. 4.** Schematic diagram of the piezoelectric linear motion motor.

**Fig. 5.** Schematic diagram of the stator of the piezoelectric linear motion motor: (a) - isometric view of the stator of the piezoelectric linear motion motor; (b) - exploded view of the stator of the piezoelectric linear motion motor.

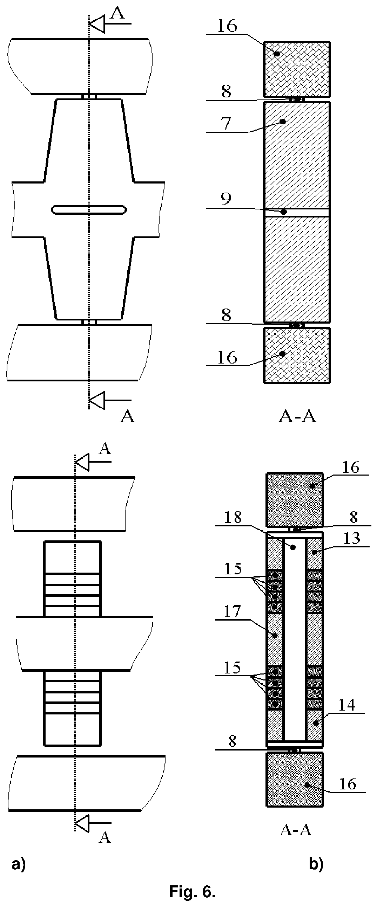

**Fig. 6.** Details of the piezoelectric linear motion motor tooth and piezoelectric package designs: (a) - design details of the tooth; (b) - design details of the piezoelectric Langevin-type package.

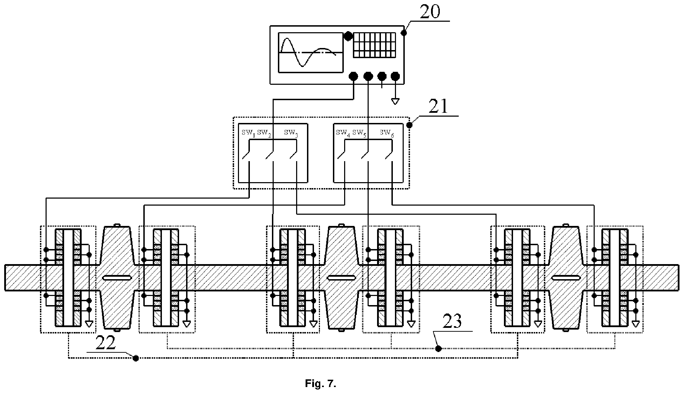

**Fig. 7.** Circuit diagram of the excitation of the piezoelectric rotary or linear motion motor.

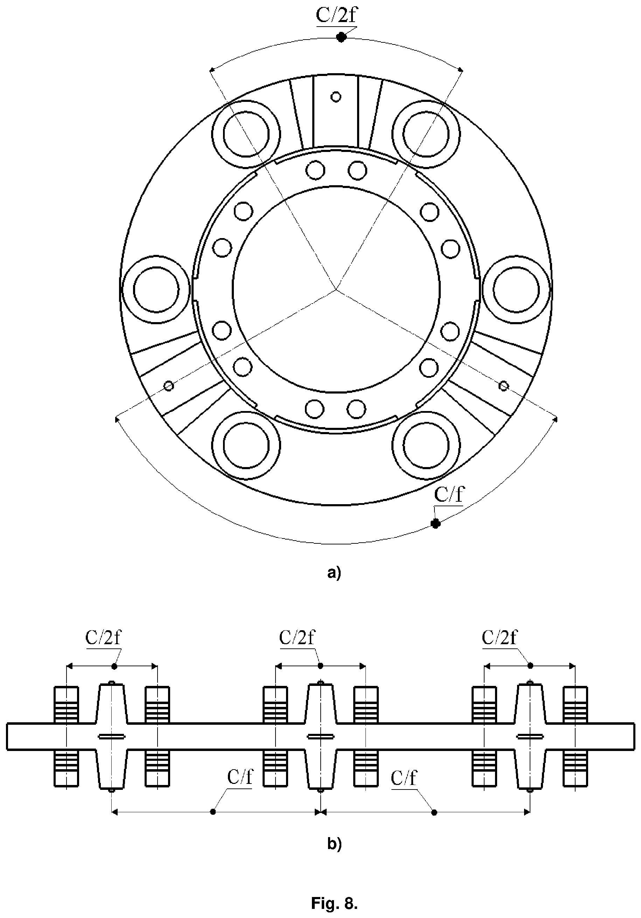

Fig. 8.   Distribution diagram of the trapezoidal double-sided teeth and piezoelectric packages: (a) - in the rotary motion drive; (b) - in the linear motion drive.

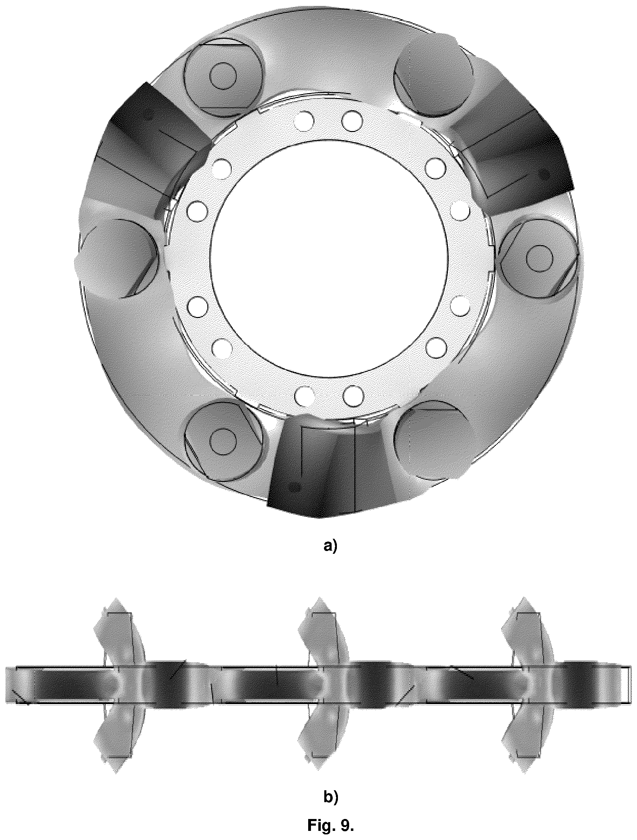

Fig. 9.   Stator oscillation modes of the rotary and linear motion motors: (a) - rotary motion motor; (b) - linear motion motor.

DRAWINGS - description of the item numbers:

1 - flat ring-shaped stator;
2 - disc-shaped rotor;
3 - clamping spring;
4 - nut;
5 - shaft;
6 - flexible ring;
7 - double-sided trapezoidal tooth;
8 - rigid frictional element;
9 - notch;
10 - stator anchor ring;
11 - piezoelectric Langevin-type package;
12 - mounting screw for the piezoelectric Langevin-type package;
13 - top part of the piezoelectric Langevin-type package;
14 - lower part of the piezoelectric Langevin-type package;
15 - piezoelectric rings;
16 - slider;
17 - flexible rod stator;
18 - stud;
19 - flexible rod;
20 - signal generator;
21 - excitation signal switching device;
22 - first group of Langevin-type packages;
23 - second group of Langevin-type packages.

DETAILED DESCRIPTION OF THE INVENTION

**Rotary motor.** The piezoelectric motor/drive is described here and below with reference to the drawings. A piezoelectric rotary motion motor includes the following parts: a flexible ring-shaped stator (1) with two flat surfaces, on which double-sided teeth are arranged radially (7) with their wider end directed towards the stator base, having any shape that widens toward the base: symmetrical trapezoidal prisms, cones, hemispheres, or semi ellipsoids. Together, the ring and its double-sided teeth form the complete structure of the stator (1). This stator structure is made from one-piece elastic material, such as steel, aluminium, or bronze alloys. On both sides of the stator (1), the disc-shaped rotors (2) are pressed onto the aforementioned stator teeth (7) using springs. A longitudinal notch (9) is formed in the horizontal axis of symmetry of each double-sided trapezoidal tooth (7) and, at the same time, in the plane of the stator ring. This reduces the structural stiffness of the stator and allows sufficient amplitude to be achieved of the apical displacement of the double-sided trapezoidal teeth (7) at the reduced height of both the trapezoidal teeth and the complete motor (drive).

Rigid contact-friction (support) elements (8) are placed on the upper and lower planes of the double-sided teeth (7). These contact-friction elements (8) come into direct contact with the two disc-shaped rotors (2) connected to the drive shaft (5). In this way, the rotors connected and clamped form a tribological pair, whose clamping force against the friction elements (8) of the stator teeth can be changed by compressing or releasing the clamping spring (3). The compression/release of the spring is controlled by the vertical position of the compression nuts (4) on the drive shaft (5).

The motor rotors (2) are made of a hard material, similar to the contact-frictional elements (8).

The motor stator (1) is anchored in the drive using the stator anchor ring (10). This ring is connected to the stator (1) permanently and in such a way that the connection points of the anchor ring (10) and the stator (1) coincide with the nodal zones of the longitudinal oscillations excited in the stator (1). The ring-shaped stator (1) also incorporates piezoelectric actuators, such as Langevin-type packages (11). The distribution of the piezoelectric actuators in the ring shall be chosen to coincide with the nodes of the longitudinal oscillations excited in the ring-shaped stator (1). The Langevin package (11) consists of an upper part (13), piezoelectric rings (15), a lower part (14), and a package fixing screw (12), which is used for the removable attachment of the piezoelectric Langevin package (11) to the ring stator (1).

**Linear motion motor.** Another possible implementation of this invention is a linear motion motor. In the linear motion motor version, the stator (17) is in the form of an flexible rod and linear sliders (16) are used instead of the two disc-shaped rotors (2). Alternatively, the screw (12) can be replaced by a stud (18). Meanwhile, the design and installation principles of the trapezoidal double-sided teeth (7) and the piezoelectric Langevin packages (11) described above are the same as those of the rotary motor. This linear motion motor generates a linear motion.

**Description of motor operation.** The rotary motion (16) of a pair of disc-shaped rotors (2) is obtained by applying harmonic or non-harmonic periodic electrical signals to piezoelectric Langevin-type packages (11), using an excitation switching device (21) and a signal generator (20), the parameters of which, such as frequency, amplitude, phase, and waveform, are matched to the electromechanical characteristics of the drive. The excitation signals to the motor's Langevin packages (11) can be formed by three different excitation circuit diagrams.

In the linear motion motor version, the principle of excitation remains the same, only the nature of the motion generated by the motor is different: in this case, a linear sliding motion is excited.

**Excitation circuit diagram 1.** In the first excitation circuit diagram, the rotational motion of the disc-shaped rotor (2) is excited by the first group of Langevin packages (22). This group shall be excited via the electrical excitation signal switching device (21) by a harmonic electrical signal at a frequency f matched to the resonance frequency of the longitudinal oscillations of the ring stator (1). Meanwhile, the second group of Langevin packages (23) does not receive an electrical signal and remains passive. The first group (22) of Langevin packages (11), under the influence of the excitation signal, deforms the flexible ring stator (1) in the transverse direction and also in the longitudinal direction due to the deformation produced by the Poisson's ratio, by synchronously expanding and contracting along their vertical axis of symmetry. Therefore, the double-sided trapezoidal teeth (7), in addition are bent because of the notches (9). The bending oscillations of the double-sided trapezoidal teeth (7) are transmitted to the disc-shaped rotors (2) via rigid friction elements (8), thus generating the rotary motion of the rotors. In order to create a counter-rotary motion of the rotors, a second group of Langevin packages (23) is excited via the signal switching device (21), while the first group (22) is no longer excited.

**Excitation circuit diagram 2.** In the second excitation circuit diagram, the rotational motion of the disc rotor (2) is excited by the first and second groups of piezoelectric packages (22, 23). Via the electrical excitation signal switching device (21), the two groups are exposed in parallel to two harmonic signals with a phase difference set at $\pi/2$, and a frequency f matched to the longitudinal oscillation resonance frequency of the ring stator (1). Acting asynchronously in groups, the Langevin packages (11) stretch and contract along their vertical axis of symmetry. Due to the flexibility of the material of the stator (1) and the Poisson's ratio, they excite the longitudinal oscillations in the stator (1), thus producing travelling-wave oscillation. Under the influence of these oscillations, the tips of the double-sided trapezoidal teeth (7) being bent form elliptical trajectories of motion, which are passed on through the rigid friction elements (8) to the disc-shaped rotors (2). This creates the rotational movement of the rotors (2). Meanwhile, the rotor (2) is excited to rotate in the opposite direction by the same harmonic excitation signals from the electrical signal switching device (21), but swapped between the two groups of Langevin packages (22, 23) mentioned above.

**Excitation circuit diagram 3.** In the third excitation circuit diagram, the rotational movement of the disc-shaped rotors (2) is formed by the first and second groups of piezoelectric packages (22, 23). The two groups are subjected in parallel, via the electrical excitation switching device (21), to two asymmetrical periodic signals, whose phase difference is set to $\pi$, and whose frequency $f$ is adjusted to be close to, or equal to, the frequency of the longitudinal oscillations of the ring stator (1). Due to the asymmetric shape of the excitation signal, the Langevin packages (11) stretch and contract at different rates. The bending strain rate of the double-sided trapezoidal teeth (7) is also different due to the different rates of contraction and expansion and the longitudinal oscillations induced in the ring stator (1). This results in the inertial operation of the rotary motion motor. These asymmetric oscillations of the double-sided trapezoidal teeth (7) are transmitted through the rigid friction elements (8) to the disc rotors (2), creating the rotating movement of the rotors. Meanwhile, the rotation of the rotors in the opposite direction is created by changing the phases of the excitation signals to the opposite.

**Other implementation options.** The technical embodiment of the motor is not limited to the examples provided above. Various other modifications and improvements of embodiment are possible while maintaining the essential features of this invention (the motor and its construction).

**Application.** This piezoelectric motor design can be applied in high-precision gyroscopic spatial or other types of positioning systems used to control the position of objects in space, such as micro and nano satellites. That is, to determine, control, and continuously correct the spatial orientation of an object (e.g. self-orienting satellites or space vehicles) during their uninterruptible operational cycle.

**Claims**

1. A piezoelectric motor comprising

   • a stator including a flexible ring (6) with teeth (7) on a flat surface of the ring, acting as a resonator with its own longitudinal oscillation frequency,
   • a disc-shaped rotor (2) pressed against the stator teeth, and stator-mounted piezoelectric actuators (11), which are excited by electrical signals, **characterized in that**
   • the stator teeth are double-sided (7), arranged symmetrically radially on either side of the stator ring (6) with two flat surfaces, and the total height of the double-sided teeth, together with the thickness of the stator ring (6), is close to or equal to the half-wavelength of the stator ring's own longitudinal oscillation,
   • the motor rotor (2) is a tribological pair of two disc rotors with a coaxial shaft (5) with a stator (1), whose disc rotors (2) are pressed against the stator double-sided teeth (7) on both sides of the stator (1).

2. Motor according to claim 1, **characterized in that** the distance between the double teeth of the stator (7) is close to or equal to one or more wavelengths of the stator's flexible ring (6) longitudinal vibrations.

3. Motor according to claim 1 or 2, **characterized in that** the shape of a single tooth of the stator's double-sided teeth (7) widens from the top of the tooth to the tooth base, located on the flat ring (6) of the stator (1).

4. Motor according to claim 3, **characterized in that** the one-sided tooth widening towards the base of the flat ring (6) has any of the following shapes that widen towards the base of the stator: symmetrical trapezoidal prisms, cones, hemispheres, or semi-ellipsoids.

5. Motor according to any claim 1 to 4, **characterized in that** the tips of each double-sided tooth (7) have rigid friction elements (8), which together with the pressed disc rotors (2) form a tribological pair of high stiffness.

6. Motor according to any claim 1 to 5, **characterized in that** a notch (9) is formed in the horizontal axis of symmetry of each of the double-sided trapezoidal teeth (7) and also in the plane of the stator flat ring (6), not exceeding 2/3 of the maximum width of the double-sided tooth.

7. Motor according to any claim 1 to 6, **characterized in that** the motor rotors (2) are configured to be pressed through the coaxial shaft (5) against the stator teeth (7) by springs, where the force of the clamping spring (3) is adjusted by the nut (4), tightened on the coaxial shaft (5).

8. Motor according to any claim 1 to 7, **characterized in that** piezoelectric drives are Langevin-type packages (11) designed to generate longitudinal oscillations of the stator ring (6) and mounted in the nodal zones of the longitudinal oscillations of the stator ring (6), and their height, together with the thickness of the flexible ring (6), is close to or equal to the wavelength of the stator ring's (6) longitudinal oscillations.

9. Motor according to any claim 1 to 8, **characterized in that** the motor rotors (2) and frictional elements (8) of the double-sided teeth are made of rigid and abrasion-resistant material, in the most appropriate case aluminium oxide $Al_2O_3$ or titanium oxide, $TiO_2$.

10. Motor according to any claim 1 to 9, **characterized in that** the motor stator (1) with its double-sided teeth (7) is a one-piece structure made of a elastic material, preferably steel, bronze, or aluminium alloy.

11. A piezoelectric drive comprising at least of

> • a piezoelectric motor in accordance with any claim 1 to 10, and
> • an electric signal generator connected to the piezoelectric Langevin type packages of the aforementioned motor (11),
> **characterized in that** the rotational movement of the tribological pair of motor rotors (2) is created by the excitation of the Langevin type packages (11) by harmonic or periodic-asymmetric electrical signals with a frequency f matched to one of the longitudinal oscillation resonant frequencies of the stator ring (6), according to the condition of matching the efficient excitation:

$$D = nC/\pi f,$$

where D is the average diameter of the stator ring (6), C - speed of propagation of longitudinal oscillations in the stator ring, f - frequency of the excitation signal; n - an integer.

12. Drive in accordance with claim 10, **characterized in that** the rotational motion of the tribological pair of motor rotors (2) is generated by the excitation of the Langevin type package or their group (22, 23) by a single harmonic signal having its frequency f matched close to or equal to the longitudinal oscillation resonance frequency of the ring stator (1).

13. Drive in accordance with claim 10, **characterized in that** the rotational motion of the tribological pair of motor rotors (2) is generated simultaneously in two groups of Langevin type packages (22, 23) by the excitation in parallel by two harmonic signals with the phase difference set to $\pi/2$, and the frequency of both excitation signals $f$ is matched to the resonance frequency of the longitudinal oscillations of the ring stator (1).

14. Drive in accordance with claim 10, **characterized in that** the rotational movement of the tribological pair of motor rotors (2) is created in two groups of Langevin type packages (22, 23), excited in parallel by two asymmetric-periodic signals with a phase difference of $\pi$, and the frequency f is matched to the resonant frequency of the longitudinal oscillations of the ring stator (1), where due to the unsymmetrical shape of the signal, the Langevin type packages (11) stretch and contract at different speeds, respectively, the rate of bending deformations of the double-sided teeth (7) is different, thus resulting in inertial operation of the rotary motor.

15. Drive according to any claim 10 to 14, **characterized in that** additionally includes the motor load, and the parameters of the electrical excitation signal, such as frequency, amplitude, phase and waveform, are adjusted according to the changed electromechanical characteristics of the drive.

**Patentansprüche**

1. Piezoelektrischer Motor, umfassend:

   • einen Stator mit einem flexiblen Ring (6) mit Zähnen (7) auf einer flachen Oberfläche des Rings, der als Resonator mit seiner eigenen Längsschwingungsfrequenz agiert,
   • einen scheibenförmigen Rotor (2), der gegen die Statorzähne gepresst wird, und

   am Stator montierte piezoelektrische Stellglieder (11), die durch elektrische Signale angeregt werden,
   **dadurch gekennzeichnet, dass**

   • die Statorzähne doppelseitig (7) und symmetrisch radial beidseits des Statorrings (6) mit zwei flachen Oberflächen angeordnet sind, und die Gesamthöhe der doppelseitigen Zähne zusammen mit der Dicke des Statorrings (6) nahe oder gleich der Halbwellenlänge der eigenen Längsschwingung des Statorrings ist,
   • der Motorrotor (2) ein tribologisches Paar von zwei Scheibenrotoren mit einer Koaxialwelle (5) mit einem Stator (1) ist, dessen Scheibenrotoren (2) auf beiden Seiten des Stators (1) gegen die doppelseitigen Zähne (7) des Stators gepresst werden.

2. Motor nach Anspruch 1, **dadurch gekennzeichnet, dass** der Abstand zwischen den Doppelzähnen des Stators (7) nahe oder gleich einer oder mehreren Wellenlängen der Längsvibrationen des flexiblen Rings (6) des Stators ist.

3. Motor nach Anspruch 1 oder 2, **dadurch gekennzeichnet, dass** sich die Form eines Einzelzahns der doppelseitigen Zähne (7) des Stators von der Oberseite des Zahns bis zur Zahnbasis verbreitert, die sich auf dem Flachring (6) des Stators (1) befindet.

4. Motor nach Anspruch 3, **dadurch gekennzeichnet, dass** der einseitige Zahn, der sich zur Basis des Flachrings (6) hin verbreitert, eine beliebige der folgenden Formen aufweist, die sich zur Basis des Stators hin verbreitern: symmetrische Trapezprismen, Kegel, Halbkugeln oder Halbellipsoide.

5. Motor nach einem der Ansprüche 1 bis 4, **dadurch gekennzeichnet, dass** die Spitzen jedes doppelseitigen Zahns (7) starre Reibelemente (8) aufweisen, die zusammen mit den gepressten Scheibenrotoren (2) ein tribologisches Paar hoher Steifigkeit bilden.

6. Motor nach einem der Ansprüche 1 bis 5, **dadurch gekennzeichnet, dass** in der horizontalen Symmetrieachse jedes der doppelseitigen Trapezzähne (7) und auch in der Ebene des Flachrings (6) des Stators eine Kerbe (9) ausgebildet ist, die 2/3 der maximalen Breite des doppelseitigen Zahnes nicht überschreitet.

7. Motor nach einem der Ansprüche 1 bis 6, **dadurch gekennzeichnet. dass** die Motorrotoren (2) ausgebildet sind, um durch Federn durch die Koaxialwelle (5) gegen die Statorzähne (7) gepresst zu werden, wobei die Kraft der Spannfeder (3) durch die Mutter (4) eingestellt wird, die auf der Koaxialwelle (5) festgezogen ist.

8. Motor nach einem der Ansprüche 1 bis 7, **dadurch gekennzeichnet, dass** piezoelektrische Antriebe Anordnungen (11) vom Langevin-Typ sind, die zur Erzeugung von Längsschwingungen des Statorrings (6) ausgelegt sind und in den Knotenzonen der Längsschwingungen des Statorrings (6) montiert sind und deren Höhe zusammen mit der Dicke des flexiblen Rings (6) nahe oder gleich der Wellenlänge der Längsschwingungen des Statorrings (6) ist.

9. Motor nach einem der Ansprüche 1 bis 8, **dadurch gekennzeichnet, dass** die Motorrotoren (2) und Reibungselemente (8) der doppelseitigen Zähne aus starrem und abriebfestem Material, im besten Fall Aluminiumoxid $Al_2O_3$ oder Titanoxid, $TiO_2$, bestehen.

10. Motor nach einem der Ansprüche 1 bis 9, **dadurch gekennzeichnet, dass** der Motorstator (1) mit seinen doppelseitigen Zähnen (7) eine einstückige Struktur aus einem elastischen Material, vorzugsweise Stahl-, Bronze- oder Aluminiumlegierung, ist.

11. Piezoelektrischer Antrieb, der zumindest umfasst

   • einen piezoelektrischen Motor nach einem der Ansprüche 1 bis 10, und
   • einen Erzeuger elektrischer Signale, der mit den piezoelektrischen Anordnungen vom Langevin-Typ des vorgenannten Motors (11) verbunden ist,
   **dadurch gekennzeichnet, dass** die Drehbewegung des tribologischen Paares von Motorrotoren (2) durch die Anregung der Anordnungen (11) vom Langevin-Typ durch harmonische oder periodischasymmetrische elektrische Signale mit einer Frequenz f erzeugt wird, die mit einer der Längsschwingungsresonanzfrequenzen des Statorrings (6) abgestimmt ist, entsprechend der Bedingung einer Abstimmung auf eine effiziente Anregung:

$$D = nC / \pi f,$$

wobei $D$ der durchschnittliche Durchmesser des Statorrings (6) ist, $C$ eine Geschwindigkeit der Ausbreitung der Längsschwingungen im Statorring ist, $f$ eine Frequenz des Anregungssignals ist; $n$ eine ganze Zahl ist.

12. Antrieb nach Anspruch 10, **dadurch gekennzeichnet, dass** die Drehbewegung des tribologischen Paares von Motorrotoren (2) durch die Anregung der Anordnung vom Langevin-Typ oder deren Gruppe (22, 23) durch ein einzelnes harmonisches Signal erzeugt wird, dessen Frequenz $f$ nahe oder gleich der Längsschwingungsresonanzfrequenz des Ringstators (1) abgestimmt ist.

13. Antrieb nach Anspruch 10, **dadurch gekennzeichnet, dass** die Drehbewegung des tribologischen Paares von Motorrotoren (2) durch die Anregung parallel durch zwei harmonische Signale mit der Phasendifferenz $\pi / 2$ gleichzeitig in zwei Gruppen von Anordnungen (22, 23) vom Langevin-Typ erzeugt wird und die Frequenz der beiden Anregungssignale $f$ auf die Resonanzfrequenz der Längsschwingungen des Ringstators (1) abgestimmt ist.

14. Antrieb nach Anspruch 10, **dadurch gekennzeichnet, dass** die Drehbewegung des tribologischen Paares von Motorrotoren (2) in zwei Gruppen von Anordnungen (22, 23) vom Langevin-Typ erzeugt wird, die parallel durch zwei asymmetrischperiodische Signale mit einer Phasendifferenz $\pi$ angeregt werden, und die Frequenz $f$ mit der Resonanzfrequenz der Längsschwingungen des Ringstators (1) abgestimmt ist, wobei aufgrund der unsymmetrischen Form des Signals die Anordnungen (11) vom Langevin-Typ sich bei unterschiedlichen Geschwindigkeiten dehnen bzw. zusammenziehen, wobei die Rate der Biegeverformungen der doppelseitigen Zähne (7) unterschiedlich ist, was zu einem Trägheitsbetrieb des Drehmotors führt.

15. Antrieb nach einem der Ansprüche 10 bis 14, **dadurch gekennzeichnet, dass** zusätzlich die Motorlast umfasst und die Parameter des elektrischen Anregungssignals, wie Frequenz, Amplitude, Phase und Wellenform, entsprechend den geänderten elektromechanischen Eigenschaften des Antriebs angepasst werden.

## Revendications

1. Moteur piézoélectrique comprenant

   • un stator comprenant un anneau flexible (6) avec des dents (7) sur une surface plane de l'anneau, agissant comme un résonateur avec sa propre fréquence d'oscillation longitudinale,
   • un rotor en forme de disque (2) pressé contre les dents du stator, et des actionneurs piézoélectriques montés sur le stator (11), qui sont excités par des signaux électriques,
   **caractérisé en ce que**
   • les dents du stator sont à double face (7), disposées symétriquement radialement de part et d'autre de l'anneau de stator (6) avec deux surfaces planes, et la hauteur totale des dents à double face, ainsi que l'épaisseur de l'anneau de stator (6), sont proches ou égales à la demi-longueur d'onde de l'oscillation longitudinale propre de l'anneau de stator,
   • le rotor de moteur (2) est une paire tribologique de deux rotors à disques avec un arbre coaxial (5) avec un stator (1), dont les rotors à disques (2) sont pressés contre les dents à double face de stator (7) des deux côtés du stator (1).

2. Moteur selon la revendication 1, **caractérisé en ce que** la distance entre les dents à double face de stator (7) est proche ou égale à une ou plusieurs longueurs d'onde des vibrations longitudinales de l'anneau flexible (6) du stator.

3. Moteur selon la revendication 1 ou 2, **caractérisé en ce que** la forme d'une seule dent des dents à double face de stator (7) s'élargit du sommet de la dent jusqu'à la base de la dent, située sur l'anneau plat (6) du stator (1).

4. Moteur selon la revendication 3, **caractérisé en ce que** la dent unilatérale s'élargissant vers la base de l'anneau plat (6) présente l'une quelconque des formes suivantes s'élargissant vers la base du stator : des prismes trapézoïdaux symétriques, des cônes, des hémisphères ou des demi-ellipsoïdes.

5. Moteur selon l'une quelconque des revendications 1 à 4, **caractérisé en ce que** les pointes de chaque dent à double face (7) comportent des éléments de frottement rigides (8), qui forment avec les rotors à disques pressés (2) une paire tribologique de rigidité élevée.

6. Moteur selon l'une quelconque des revendications 1 à 5, **caractérisé en ce qu'**une encoche (9) est formée dans l'axe horizontal de symétrie de chacune des dents trapézoïdales à double face (7) ainsi que dans le plan de l'anneau plat de stator (6), ne dépassant pas les 2/3 de la largeur maximale de la dent à double face.

7. Moteur selon l'une quelconque des revendications 1 à 6, **caractérisé en ce que** les rotors de moteur (2) sont configurés pour être pressés à travers l'arbre coaxial (5) contre les dents de stator (7) par des ressorts, où la force du ressort de serrage (3) est ajustée par l'écrou (4), serré sur l'arbre coaxial (5).

8. Moteur selon l'une quelconque des revendications 1 à 7, **caractérisé en ce que** des entraînements piézoélectriques sont des boîtiers de type Langevin (11) conçus pour générer des oscillations longitudinales de l'anneau de stator (6) et montés dans les zones nodales des oscillations longitudinales de l'anneau de stator (6), et leur hauteur, ainsi que l'épaisseur de l'anneau flexible (6), sont proches ou égales à la longueur d'onde des oscillations longitudinales de l'anneau de stator (6).

9. Moteur selon l'une quelconque des revendications 1 à 8, **caractérisé en ce que** les rotors de moteur (2) et les éléments de frottement (8) des dents à double face sont réalisés en matériau rigide et résistant à l'abrasion, dans le cas le plus approprié en oxyde d'aluminium $Al_2O_3$ ou en oxyde de titane, $TiO_2$.

10. Moteur selon l'une quelconque des revendications 1 à 9, **caractérisé en ce que** le stator de moteur (1) avec ses dents à double face (7) est une structure monobloc réalisée en un matériau élastique, de préférence en acier, en bronze ou en alliage d'aluminium.

11. Entraînement piézoélectrique comprenant au moins

    • un moteur piézoélectrique selon l'une quelconque des revendications 1 à 10, et
    • un générateur de signaux électriques connecté aux boîtiers piézoélectriques de type Langevin du moteur (11) précité,

    **caractérisé en ce que** le mouvement de rotation du couple tribologique de rotors de moteur (2) est créé par l'excitation des boîtiers de type Langevin (11) par des signaux électriques harmoniques ou périodiques asymétriques de fréquence f adaptée à l'une des fréquences de résonance d'oscillations longitudinales de l'anneau de stator (6), selon la condition d'adaptation de l'excitation efficace :

$$D = nC/\pi f,$$

    où D est le diamètre moyen de l'anneau de stator (6), C - la vitesse de propagation d'oscillations longitudinales dans l'anneau de stator, f - la fréquence du signal d'excitation ; n - un entier.

12. Entraînement selon la revendication 10, **caractérisé en ce que** le mouvement de rotation de la paire tribologique de rotors de moteur (2) est généré par l'excitation du boîtier de type Langevin ou de leur groupe (22, 23) par un signal harmonique unique dont la fréquence f est adaptée proche ou égale à la fréquence de résonance d'oscillation longitudinale du stator annulaire (1).

13. Entraînement selon la revendication 10, **caractérisé en ce que** le mouvement de rotation de la paire tribologique de rotors de moteur (2) est généré simultanément dans deux groupes de boîtiers de type Langevin (22, 23) par l'excitation en parallèle de deux signaux harmoniques avec le déphasage réglé à $\pi/2$, et la fréquence des deux signaux d'excitation f est adaptée à la fréquence de résonance des oscillations longitudinales du stator annulaire (1).

14. Entraînement selon la revendication 10, **caractérisé en ce que** le mouvement de rotation de la paire tribologique de rotors de moteur (2) est créé dans deux groupes de boîtiers de type Langevin (22, 23), excités en parallèle par deux signaux asymétriquespériodiques avec une différence de phase de $\pi$, et la fréquence f est adaptée à la fréquence de résonance des oscillations longitudinales du stator annulaire (1), où en raison de la forme asymétrique du signal, les boîtiers de type Langevin (11) s'étirent et se contractent à des vitesses différentes, respectivement, le taux de déformations de flexion des dents à double face (7) est différent, ce qui entraîne un fonctionnement inertiel du moteur rotatif.

15. Entraînement selon l'une quelconque des revendications 10 à 14, **caractérisé en ce qu'**il comprend en outre la charge de moteur, et les paramètres du signal d'excitation électrique, tels que la fréquence, l'amplitude, la phase et la forme d'onde, sont ajustés en fonction des caractéristiques électromécaniques modifiées de l'entraînement.

a)

b)

Fig. 1.

a)

b)

Fig. 2.

a)

b)

Fig. 3.

**Fig. 4.**

a)

b)

**Fig. 5.**

Fig. 6.

Fig. 7.

C/2f

C/f

a)

C/2f    C/2f    C/2f

C/f    C/f

b)

**Fig. 8.**

a)

b)

Fig. 9.

**EP 4 531 264 B1**

**REFERENCES CITED IN THE DESCRIPTION**

**Patent documents cited in the description**

- JP 2000152671 A
- US 6628045 B2
- US 6262515 B1
- WO 03010879 A2
- US 2006145572 A1
- CN 110677073 A